# EUROPEAN PATENT SPECIFICATION

(11) **EP 1 145 628 B1**
(45) Date of publication and mention of the grant of the patent: **25.06.2003**
(21) Application number: 01201048.4
(22) Date of filing: 21.03.2001
(51) Int. Cl.: A01K 5/02, A01K 15/02, G01G 21/23, G01G 13/22, G01G 19/14

(54) **A feed metering device**
Dosiervorrichtung für Futter
Dispositif de dosage d'alimentation

(30) Priority: 10.04.2000 NL 1014896
(43) Date of publication of application: 17.10.2001
(73) Proprietor: Lely Enterprises AG, 6300 ZUG (CH)
(72) Inventor: Van den Berg, Karel, 2971 BR Bleskensgraaf (NL)
(74) Representative: Corten, Maurice Jean F.M.

(56) References cited:
- EP-A- 0 610 171
- EP-A- 0 636 312
- WO-A-95/23503
- WO-A-96/05723
- NL-A- 9 201 487
- NL-C- 1 002 399
- US-A- 5 570 655

## Description

The present invention relates to a feed metering device according to the preamble of claim 1. Such a feed unit may be constituted by a manger or feeding trough, or by a unit provided with a nipple, e.g. for calves.

Such a feed metering device is known from European patent application EP-A-0610171. By means of a control unit the closing means of this known feed metering device is actively kept in the position in which it closes the manger or feeding trough.

It is one of the objectives of the present invention to provide an alternative feed metering device for distributing fodder and/or drink in metered portions to an animal, which device, on the one hand, deters in a constructively simple, efficient and cheap manner animals that are not eligible for being fed from putting their heads into the feed unit, and, on the other hand, offers additional advantages.

For that purpose, in accordance with the invention, a feed metering device of the above described type is characterized by the measures according to the characterizing part of claim 1.

The feed metering device preferably includes an animal identification device, the roll being controlled with the aid of data from the animal identification device.

In an embodiment of a feed metering device according to the invention, there is obtained a compact construction when the roll is disposed in the vicinity below the entrance opening. Preferably there is disposed a housing in the vicinity below the entrance opening, in which housing the roll is mounted.

The closing means may be formed by a separate component, but is preferably constituted by the feed unit itself, which is designed as a movable one. As a result thereof the number of components is limited and the feed metering device can be manufactured cheaply.

In order to prevent fodder and/or drink from falling from the feed unit in certain positions of the feed unit, the latter comprises a wall portion for catching remaining fodder and/or drink. Said wall portion can also act as a feed guide means for fodder and/or drink that is supplied by the feed supplying device to the feed unit.

A stable construction is obtained when the feed unit bears on the housing via the roll.

The motor is preferably included in the housing, so that a compact construction is obtained. The housing also serves for protecting the motor against contamination, damage and the like.

A quick and accurate identification of animals is obtained when the animal identification device is included in the housing, the animal identification device then also being guarded against contamination, damage and the like.

The feed metering device preferably comprises further deterring means for deterring an animal, which include a loudspeaker for producing an animal-frightening sound. Certain animals have appeared to be highly sensitive to certain sounds, so that a loudspeaker is very appropriate for deterring such animals. Moreover, such a loudspeaker may be used for producing calming or stimulating sounds when an animal uses the feed metering device correctly.

Alternatively or additionally, the further deterring means may include means for generating an animal-frightening light. In particular when a plurality of feed metering devices are disposed side by side, the use of frightening light is desired, as this light can be directed in such a manner that its effect is limited to one particular feed metering device.

The further deterring means may include a voltage emitting device for emitting an animal-frightening electric voltage. Sound and light have proved to be effective for deterring unwanted animals, but have the disadvantage of being observable sometimes at a greater distance from the relevant feed metering device. Animals that undesirably visit a feed metering device often make contact with the feed metering device, usually with their noses. By linking with a voltage emitting device precisely those components of the feed metering device that are regularly touched by the animals, it is possible to deter a particular animal very locally. Alternatively, a forced air flow may be used for deterring the animal.

A preferred embodiment of a feed metering device according to the invention is characterized in that the feed metering device is provided with means for weighing the fodder and/or drink present in the feed unit, which means move the feed unit in a pivoting respectively a rotating manner. Thus it is possible to determine how much fodder and/or drink is consumed by a particular animal. On the basis thereof the amount of fodder and/or drink consumed by an animal can be determined in the course of time and accordingly the health condition of an animal can be deduced; for, when an animal unexpectedly takes a smaller amount of fodder and/or drink, this may be a signal that the animal is ill. Moreover, it is undesirable that, when an animal leaves a certain amount of fodder and/or drink, the amount of fodder and/or drink for the next animal is supplied to the feed unit without these remnants being taken into account. The means for weighing the fodder and/or drink present in the feed unit are preferably linked with the feed supplying device for supplying an amount of fodder and/or drink to the feed unit with the aid of data both from the animal identification device and the weighing means.

The means for weighing the fodder and/or drink present in the feed unit may comprise a feed unit which is pivotable about a hinge pin, the degree of pivotability being determined by the weight of the fodder and/or drink present in the feed unit, and a device for determining the degree of pivotability of the feed unit and for deducing, from the degree as determined, the weight of the fodder and/or drink present in the feed unit. The degree of pivotability of the feed unit depends on the amount of fodder and/or drink in the feed unit. The more fodder and/or drink, the larger the degree of pivotability. The exact correlation between the degree of pivotability and the amount of fodder and/or drink can previously be determined by means of simple calibration tests.

A compact construction of the feed metering device is obtained when the device for determining the degree of pivotability of the feed unit and for deducing, from the degree as determined, the weight of the amount of fodder and/or drink present in the feed unit, is integrated in the animal identification device.

When the device for determining the degree of pivotability of the feed unit and for deducing, from the degree as determined, the weight of the amount of fodder and/or drink present in the feed unit comprises a measuring roll which is in contact with the feed unit, it is possible to determine from the degree of rotation of the roll the degree of pivotability and thus the amount of fodder and/or drink in the feed unit.

Alternatively or additionally, the device for determining the degree of pivotability of the feed unit and for deducing, from the degree as determined, the weight of the amount of fodder and/or drink present in the feed unit, comprises a load sensor, the feed unit bearing on the load sensor. The load sensor is preferably included in the animal identification device.

In order to be able to measure even a small difference in weight, in a preferred embodiment of a feed metering device according to the invention, the hinge pin and the load sensor respectively the measuring roll are located at a small distance from each other.

In order to prevent for example the load sensor from being damaged in the undesired event of a defect, there is provided a safety supporting bracket for the feed unit.

A preferred embodiment of a feed metering device according to the invention is characterized in that the means for weighing the fodder and/or drink present in the feed unit comprise a movable feed unit, a motor for moving the feed unit, a device for measuring the magnitude of the torque during movement, and for deducing, from the magnitude of the torque measured, the weight of the fodder and/or drink present in the feed unit. The magnitude of the torque generated by the movement of the feed unit depends on the amount of fodder and/or drink in the feed unit. Also in this situation, the exact correlation between torque and amount of fodder and/or drink can previously be determined by means of simple calibration tests.

A compact feed metering device is obtained when the motor for moving the feed unit and the device for measuring the magnitude of the torque during movement and for deducing, from the magnitude of the torque measured, the weight of the fodder and/or drink present in the feed unit, are integrated in the animal identification device.

A mechanically simple but accurate construction is obtained when the motor for moving the feed unit drives a torque roll, said torque roll being in contact with the feed unit.

According to the invention, the means for deterring an unwanted animal and the means for measuring the amount of fodder and/or drink in the feed unit can be combined in one means, in that the roll for driving the feed unit as a closing means and the torque roll used on measuring the torque are constituted by one roll.

In order to be able accurately to perform animal identification and to obtain at the same time a compact construction, a feed metering unit according to the present invention is characterized in that the animal identification device is disposed in the vicinity below the entrance opening.

The invention will be explained hereinafter in further detail with reference, by way of example, to the drawing in which:
Figure 1 is a first embodiment of a feed metering device according to the invention;
Figure 2 is a second embodiment of a feed metering device according to the invention;
Figure 3 is a third embodiment of a feed metering device according to the invention;
Figure 4 is a fourth embodiment of a feed metering device according to the invention, and
Figure 5 is a fifth embodiment of a feed metering device according to the invention.

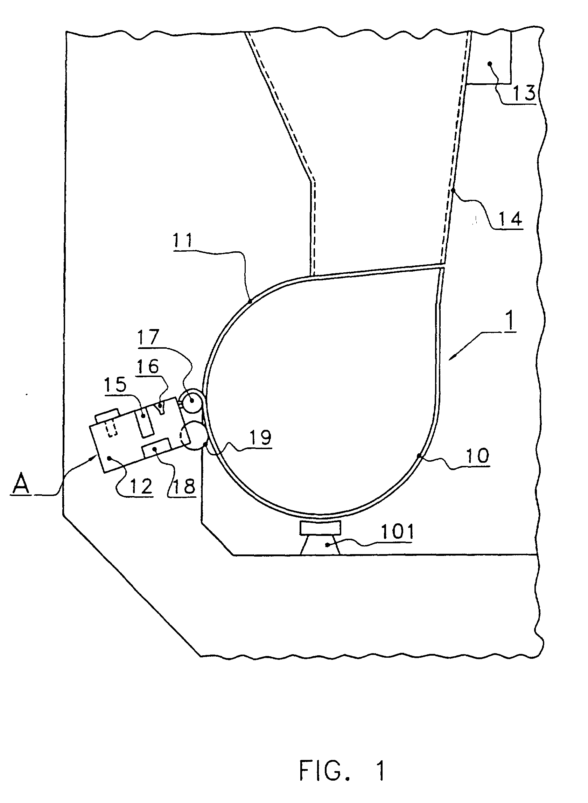

Figure 1 shows schematically a first embodiment of a feed metering device 1 according to the invention. The feed metering device 1 distributes fodder and/or drink (hereinafter to be denoted by feed, by which is meant fodder and/or drink), in metered portions to an animal, and is provided with a feed unit 10, also called manger or feeding trough, for containing feed. An entrance opening 11 makes the feed unit 10 accessible to an animal, for example but not exclusively a cow. An animal identification device 12, known per se, recognizes a particular animal that approaches the feed unit 10 and wishes to use it. The animal identification device 12 is preferably disposed in the feed metering device 1, but may alternatively also be disposed at a distance therefrom. A feed supplying device 13 supplies an amount of feed to the feed unit 10, possibly with the aid of data from the animal identification device 12, the feed of a non-shown feed stock entering the feed unit 10 via e.g. a (non-shown) valve and a chute 14.

Thus it is possible for the feed metering device 1 to recognize a particular cow, e.g. by means of a transponder fitted to or on the cow. The feed supplying device 13 is controlled in a manner known per se by software that ensures that the right amount of feed is distributed to the relevant cow.

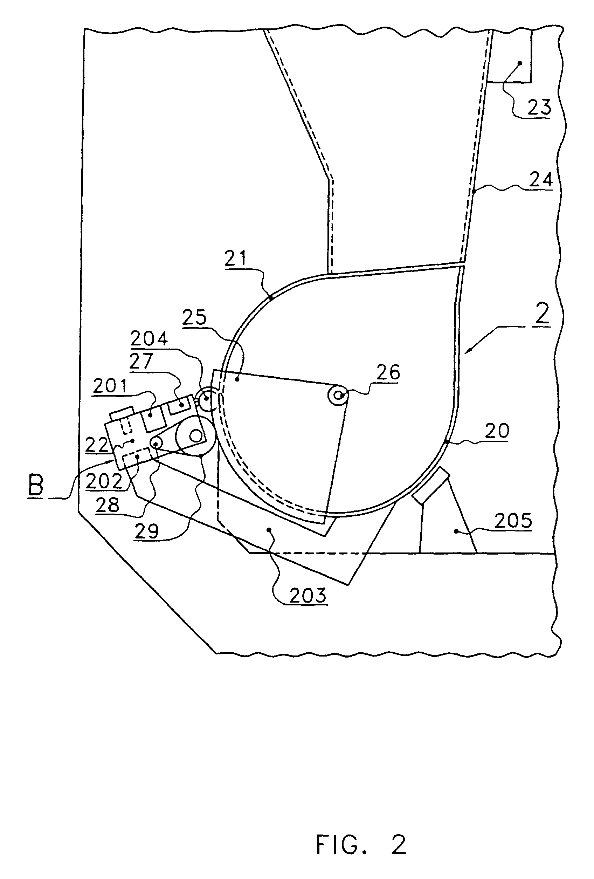

The feed metering device 1 according to the embodiment of Figure 1 is provided with a (non-shown) closing means. Such a closing means will be illustrated in Figure 2. The feed metering device 1 may additionally be provided, on a closing means, with deterring means 15, 16 for deterring an animal that visits the feed unit at an undesired point of time and actually wishes to use it. The deterring means are preferably controlled with the aid of data from the animal identification device. This provides an extra manner to deter animals that are not eligible for being fed, in a simple, efficient and cheap way, from putting their heads into the feed unit.

In the embodiment shown in Figure 1, the further deterring means include a loudspeaker 16 for producing an animal-frightening sound. Alternatively or additionally, the further deterring means may include a lighting device 15 for emitting an animal-frightening light. In particular when a plurality of feed metering devices are disposed side by side, the use of frightening light may be desirable, as this light can be directed in such a manner that its effect is limited to one particular feed metering device.

Figure 2 shows schematically an embodiment of a feed metering device 2 according to the invention. In this embodiment the closing means 25 is constituted by a separate vessel-like element which is capable of rotating about an axis 26 and is movable across the entrance opening 21. When the closing means 25 is moved across the entrance opening 21, the contents of the feed unit 20 can be made inaccessible to a particular animal.

Additionally, there may be provided further deterring means in the form of a voltage emitting device 27 for emitting an animal-frightening electric voltage to the closing means 25. Animals that undesirably approach the feed metering device 2 often make contact with the feed metering device 2. In particular they will touch the closing means 25 with their noses. By linking with the voltage emitting device 27 precisely those components of the feed metering device that are regularly touched by the animals, it is possible to deter a particular animal very locally as an additional measure. This second embodiment of a feed metering device 2 according to the invention also comprises a feed supplying device 23 and a chute 24 for the feed.

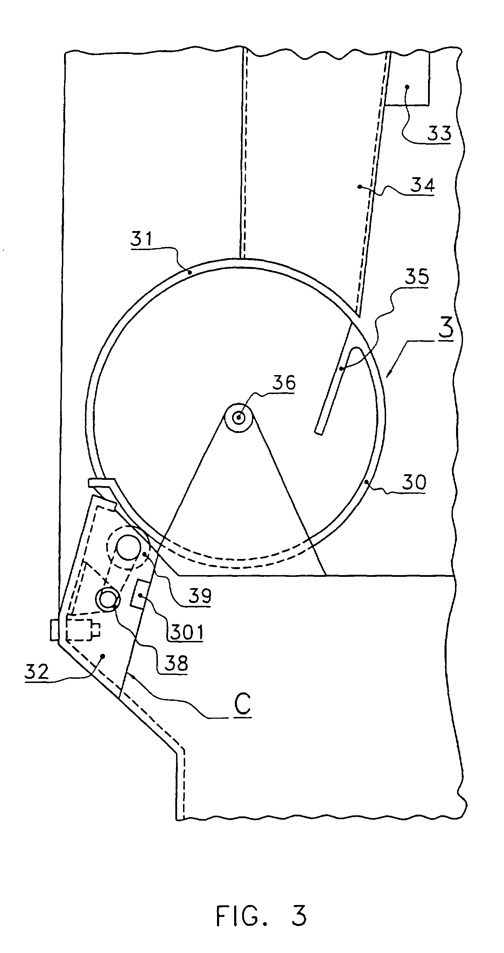

Figure 3 shows schematically a third embodiment of a feed metering device 3 according to the invention. In this embodiment the closing means is constituted by the feed unit 30 itself, which is designed as a movable one. In the embodiment shown the feed unit 30 is rotatably disposed about an axis 36. In order to prevent that, in the position in which the feed unit 30 closes the entrance opening 31, feed falls from the feed unit 30, the feed unit 30 comprises a wall portion 35 for catching remaining feed. Said wall portion 35 can also act as a feed guide means for feed that is supplied to the feed unit 30 via the chute 34 of the feed supplying device 33.

For the purpose of providing, besides a simple but reliable construction, also a compact construction, according to the invention a roll 29 respectively 39 (or 19) is driven by a motor 28 respectively 38, which roll 19, 29, 39 contacts the closing means 25 respectively 30. Preferably the feed unit 30 thus bears on the animal identification device 32 via the roll 39.

An extremely compact construction is obtained when the motor 28, 38 and the roll 29, 39 are included in a housing B, C, which is disposed in the vicinity below the entrance opening. Preferably the housing also contains the relevant animal identification devices 22, 32.

According to the invention, the feed metering device may be provided with means for weighing the feed present in the feed unit, which means move the feed unit in a pivoting respectively a rotating manner. With the aid of said means it is possible to determine how much feed is consumed by a particular animal, and at the same time whether remaining feed is present in the feed unit. The means for weighing the feed present in the feed unit are preferably connected to the feed supplying device for supplying an amount of feed to the feed unit with the aid of data both from the animal identification device and the weighing means, so that the amount of feed left by the previous animal can be taken into account.

In the embodiment of Figure 1 the means for weighing the feed present in the feed unit 10 comprise a feed unit 10 which is pivotable about a hinge pin 17. The degree of pivotability is determined by the weight of the feed present in the feed unit 10. There is provided a device 18 for determining the degree of pivotability of the feed unit 10 and for deducing therefrom the weight of the feed present in the feed unit 10. The device 18 for determining the degree of pivotability of the feed unit 10 comprises a measuring roll 19 which is in contact with the feed unit. From the degree of rotation of the roll 19 the degree of pivotability and thus the amount of feed in the feed unit 10 can be determined.

Due to the fact that the device 18, 19 for determining the degree of pivotability of the feed unit 10 is integrated in the housing A, in which e.g. the animal identification device 12 may be disposed as well, a compact construction of the feed metering device is obtained. Alternatively, the device 18, 19 may be located outside the housing A.

As shown in the embodiment of Figure 2, the device 201 for determining the degree of pivotability of the feed unit 20 and for deducing therefrom the weight of the feed present in the feed unit 20 may alternatively or additionally comprise a load sensor 202. In the embodiment shown the feed unit 20 bears on the load sensor 202 via a supporting arm 203, while the feed unit 20 pivots about a hinge pin 204. The load sensor 202 is preferably included in the housing B.

In the embodiments shown in figures 1 and 2, even small differences in weight can be measured due to the fact that the hinge pin 17, 204 and the measuring roll 19 respectively the load sensor 202 are located at a small distance from each other.

In order to prevent the measuring roll, the load sensor or similar from being damaged in case of an undesired defect, e.g. when the animal pushes the manger downwards with force, there may be provided in both embodiments a safety supporting bracket 101 (Figure 1) respectively 205 (Figure 2) for supporting the feed unit 10; 20.

In the embodiment of Figure 3, the means for weighing the feed present in the feed unit comprise a movable feed unit 30. The feed unit 30 is moved in a reciprocating manner by the motor 38 by which the roll 39 is driven. As a result of this movement there occurs a torque whose magnitude is determined by a device 301 for measuring the magnitude of the torque. The device 301 deduces the weight of the feed present in the feed unit from the torque determined. The exact correlation between torque and amount of feed can previously be determined by means of simple calibration tests.

The embodiment according to Figure 3 has a compact construction due to the fact that the motor 38 for moving the feed unit 30 and the device 301 for measuring the magnitude of the torque during movement and for deducing, from the magnitude of the torque measured, the weight of the feed present in the feed unit 30, are integrated in the housing C.

Although for the roll 39 there may be used a separate torque roll, the roll 39 preferably functions as a drive of the closing means, in this situation constituted by the feed unit 30 itself, as well as a torque roll respectively a measuring roll. Of course the torque can also be measured via said motor.

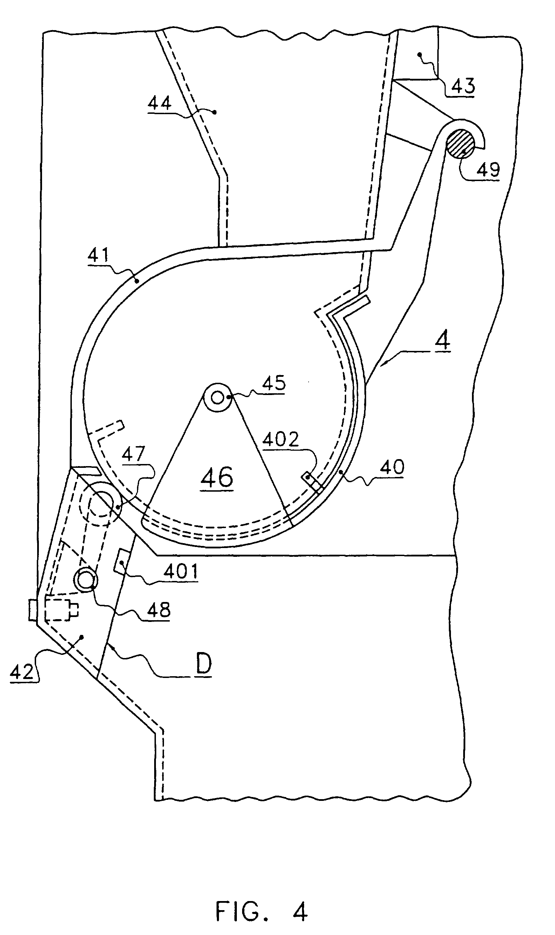

The fourth embodiment of a feed metering device 4 according to the present embodiment, as shown in Figure 4, comprises means for deterring an animal that wishes to use the feed unit 40, with the aid of data from the animal identification device 42, as well as means for weighing the feed present in the feed unit 40.

The closing means 46, which is rotatable about an axis 45, is set in rotation by a roll 47 which can come into contact with the closing means 46. The roll 47 is driven by a motor 48 which is controlled with the aid of data from the animal identification device 42.

In this embodiment the weighing means are constituted by a feed unit 40 which is rotatable about an axis 49. The feed unit 40 can be brought into contact with the roll 47, and is subjected to a reciprocating motion by correctly controlling the motor 48 that drives the roll 47. By the movement of the feed unit 40 there is generated a torque that can be measured by the torque measuring device 401.

In the situation shown in Figure 4, the roll 47 makes contact with the feed unit 40 and the latter can be set in motion for determining the amount of feed present in the feed unit 40. After an animal has consumed the feed, the amount of remaining feed can be determined by torque measurement. Then the roll 47 is controlled by the motor 48 in such a manner that the feed unit 40 will be partially located in the entrance opening 41. A catching element 402 on the feed unit 40 takes the closing means 46 along until the latter comes into contact with the roll 47. Then the roll 47 controls the closing means 46 in such a manner that the latter covers the entire entrance opening 41. As a result of the fact that the feed unit 40 is no longer in contact with the roll 47, the feed unit 40 falls back to the starting position in which feed can possibly be added by the feed supplying device 43 via the chute 44.

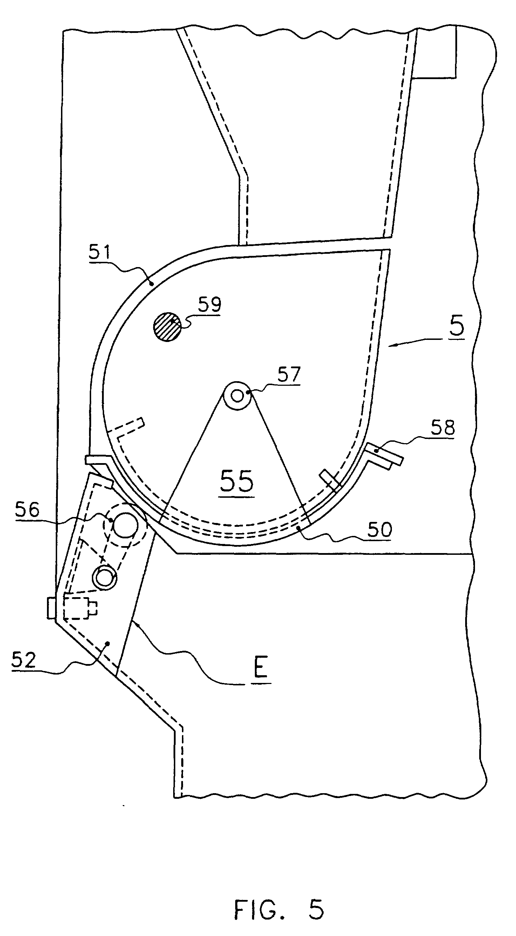

The fifth embodiment of a feed metering device according to the present invention, as shown in Figure 5, differs from that of Figure 4 by the position of the hinge pin 59 about which the feed unit 50 rotates. The hinge pin 59 is positioned close to the roll 56 for driving the feed unit 50 and measuring the torque, for measuring very small differences in the amount of feed. There is also provided a stop 58 for preventing superfluous movement of the feed unit 50. The closing means 55 for closing the entrance opening 51 pivots about the axis 57.

For the purpose of being able accurately to perform animal identification and to obtain at the same time a compact construction, a feed metering device according to the present invention is characterized in that the animal identification device is disposed in the housing E which is located in the vicinity below the entrance opening. Although the invention has been described on the basis of an animal identification device, possibly provided with weighing and/or deterring means, which is fitted to the so-called stationary world, it is also possible to dispose of the animal identification device and/or the weighing and/or the further deterring means (15,16,27) on the (possibly) movable feed unit.

## Claims

1. A feed metering device (1, 2, 3, 4, 5) for distributing fodder and/or drink in metered portions to an animal, which feed metering device (1, 2, 3, 4, 5) is provided with a feed unit (10, 20, 30, 40, 50) for containing fodder and/or drink, an entrance opening (11, 21, 31, 41, 51) to the feed unit (10, 20, 30, 40, 50), and a feed supplying device (13, 23, 33, 43) for supplying an amount of fodder and/or drink to the feed unit (10, 20, 30, 40, 50), the feed metering device (1, 2, 3, 4, 5) being provided with a closing means (25, 30, 40, 46, 50, 55) that is movable across the entrance opening in order to deter an animal visiting the feed unit (10, 20, 30, 40, 50) from taking fodder and/or drink, **characterized in that** the closing means (25, 30, 40, 46, 50, 55) rotates about an axis (26, 36, 45, 57), the closing means being driven by a roll (19, 29, 39, 47, 56) that contacts the closing means, which roll (19, 29, 39, 47, 56) is driven by a motor (28, 38, 48).

2. A feed metering device (1, 2, 3, 4, 5) as claimed in claim 1, **characterized in that** the feed metering device comprises an animal identification device (12), the roll (19, 29, 39, 47, 56) being controlled with the aid of data from the animal identification device (12).

3. A feed metering device (1, 2, 3, 4, 5) as claimed in claim 1 or 2, **characterized in that** the roll (19, 29, 39, 47, 56) is disposed in the vicinity below the entrance opening (11, 21, 31, 41, 51).

4. A feed metering device (1, 2, 3, 4, 5) as claimed in claim 1, 2 or 3, **characterized in that** a housing (A, B, C, D, E) is disposed in the vicinity below the entrance opening (11, 21, 31, 41, 51), in which housing (A, B, C, D, E) the roll (19, 29, 39, 47, 56) is mounted.

5. A feed metering device (1, 2, 3, 4, 5) as claimed in claim 1, 2, 3 or 4, **characterized in that** the movable closing means is constituted by the feed unit (30, 40, 50), which is designed as a movable one.

6. A feed metering device (1, 2, 3, 4, 5) as claimed in claim 5, **characterized in that** the feed unit (30) comprises a wall portion (35) for catching remaining feed.

7. A feed metering device (1, 2, 3, 4, 5) as claimed in claim 5 or 6, **characterized in that** the feed unit (30, 40, 50) bears on the housing (A, B, C, D, E) via the roll (19, 29, 39, 47, 56).

8. A feed metering device (1, 2, 3, 4, 5) as claimed in any one of the preceding claims, **characterized in that** the motor is included in the housing (A, B, C, D, E).

9. A feed metering device (1, 2, 3, 4, 5) as claimed in any one of the preceding claims 2 to 8, **characterized in that** the animal identification device (12) is included in the housing (A, B, C, D, E).

10. A feed metering device (1, 2, 3, 4, 5) as claimed in any one of the preceding claims, **characterized in that** the feed metering device comprises further deterring means, which further means include a loudspeaker (16) for producing an animal-frightening sound.

11. A feed metering device (1, 2, 3, 4, 5) as claimed in any one of the preceding claims, **characterized in that** the feed metering device comprises further deterring means, which further means include a lighting device (15) for emitting an animal-frightening light.

12. A feed metering device (1, 2, 3, 4, 5) as claimed in any one of the preceding claims, **characterized in that** the feed metering device comprises further deterring means, which further means include a voltage emitting device (27) for emitting an animal-frightening electric voltage.

13. A feed metering device (1, 2, 3, 4, 5) as claimed in any one of the preceding claims 10 to 12 **characterized in that** the further deterring means for deterring an animal are at least partially integrated in the housing (A, B, C, D, E).

14. A feed metering device (1, 2, 3, 4, 5) as claimed in any one of the preceding claims, **characterized in that** the feed metering device is provided with means for weighing the fodder and/or drink present in the feed unit (10, 20, 30, 40, 50), which means move the feed unit (10, 20, 30, 40, 50) in a pivoting respectively a rotating manner.

15. A feed metering device (1, 2, 3, 4, 5) as claimed in claim 14, **characterized in that** the means for weighing the fodder and/or drink present in the feed unit (10, 20, 30, 40, 50) are connected to the feed supplying device (13, 23, 33, 43) for supplying an amount of fodder and/or drink to the feed unit (10, 20, 30, 40, 50) with the aid of data both from the animal identification device (12, 22, 32, 42, 52) and the weighing means.

16. A feed metering device (1, 2, 3, 4, 5) as claimed in claim 14 or 15, **characterized in that** the means for weighing the fodder and/or drink present in the feed unit comprise:
a feed unit (10, 20, 30, 40, 50), which is pivotable about a hinge pin (26, 36, 45, 57), the degree of pivotability being determined by the weight of the fodder and/or drink present in the feed unit (10, 20, 30, 40, 50),
a device (18, 201) for determining the degree of pivotability of the feed unit (10, 20, 30, 40, 50) and for deducing, from the degree as determined, the weight of the fodder and/or drink present in the feed unit (10, 20, 30, 40, 50).

17. A feed metering device (1, 2, 3, 4, 5) as claimed in claim 16, **characterized in that** the device (18, 201) for determining the degree of pivotability of the feed unit (10, 20, 30, 40, 50) and for deducing, from the degree as determined, the weight of the fodder and/or drink present in the feed unit (10, 20, 30, 40, 50), is integrated in the housing (A, B, C, D, E).

18. A feed metering device (1, 2, 3, 4, 5) as claimed in claim 16 or 17, **characterized in that** the device for determining the degree of pivotability of the feed unit and for deducing, from the degree as determined, the weight of the fodder and/or drink present in the feed unit, comprises a measuring roll (19, 29, 39, 47, 56) which is in contact with the feed unit.

19. A feed metering device (1, 2, 3, 4, 5) as claimed in claim 16 or 17, **characterized in that** the device for determining the degree of pivotability of the feed unit and for deducing, from the degree as determined, the weight of the fodder and/or drink present in the feed unit, is constituted by a load sensor (202), the feed unit bearing on the load sensor (202).

20. A feed metering device (1, 2, 3, 4, 5) as claimed in claim 19, **characterized in that** the load sensor (202) is included in the housing (A, B, C, D, E).

21. A feed metering device (1, 2, 3, 4, 5) as claimed in claim 18 or 20, **characterized in that** a hinge pin (204, 59) and the measuring roll (29, 56) respectively the load sensor (202) are located at a small distance from each other.

22. A feed metering device (1, 2, 3, 4, 5) as claimed in any one of the preceding claims 14 to 21, **characterized in that** there is provided a safety supporting bracket (101, 205, 58) for the feed unit.

23. A feed metering device (1, 2, 3, 4, 5) as claimed in claim 14, **characterized in that** the means for weighing the fodder and/or drink present in the feed unit comprise:
a movable feed unit (30),
a motor (38) for moving the feed unit (30),
a device (301) for measuring the magnitude of the torque during movement and for deducing, from the magnitude of the torque measured, the weight of the fodder and/or drink present in the feed unit (30).

24. A feed metering device (1, 2, 3, 4, 5) as claimed in claim 23, **characterized in that** the motor (38) for moving the feed unit (30), and the device (301) for measuring the magnitude of the torque during movement and for deducing, from the magnitude of the torque measured, the weight of the fodder and/or drink present in the feed unit (30), are integrated in the housing (A, B, C, D, E).

25. A feed metering device (1, 2, 3, 4, 5) as claimed in claim 23 or 24, **characterized in that** the motor (38) for moving the feed unit (30) drives a torque roll (39), which torque roll (39) is in contact with the feed unit (30).

26. A feed metering device (1, 2, 3, 4, 5) as claimed in claims 5 and 25 or claims 5 and 18, **characterized in that** the roll for driving the feed unit and the torque roll respectively the measuring roll, are constituted by one roll.

## Patentansprüche

1. Futterdosiervorrichtung (1, 2, 3, 4, 5) zum Ausgeben von Futter und/oder Trinkflüssigkeit in dosierten Portionen an ein Tier, wobei die Futterdosiervorrichtung (1, 2, 3, 4, 5) mit einem Futterbehälter (10, 20, 30, 40, 50) zur Aufnahme von Futter und/oder Trinkflüssigkeit, einer Eintrittsöffnung (11, 21, 31, 41, 51) zu dem Futterbehälter (10, 20, 30, 40, 50) und einer Futterzuführvorrichtung (13, 23, 33, 43) zum Zuführen einer Menge an Futter und/oder Trinkflüssigkeit zu dem Futterbehälter (10, 20, 30, 40, 50) versehen ist, wobei die Futterdosiervorrichtung (1, 2, 3, 4, 5) mit einer Schließvorrichtung (25, 30, 40, 46, 50, 55) versehen ist, die über die Eintrittsöffnung zu bewegen ist, um ein den Futterbehälter (10, 20, 30, 40, 50) aufsuchendes Tier davon abzuhalten, Futter und/oder Trinkflüssigkeit aufzunehmen,
**dadurch gekennzeichnet, daß** sich die Schließvorrichtung (25, 30, 40, 46, 50, 55) um eine Achse (26, 36, 45, 57) dreht, wobei die Schließvorrichtung von einer Rolle (19, 29, 39, 47, 56) angetrieben ist, die mit der Schließvorrichtung in Kontakt steht, wobei die Rolle (19, 29, 39, 47, 56) von einem Motor (28, 38, 48) angetrieben wird.

2. Futterdosiervorrichtung (1, 2, 3, 4, 5) nach Anspruch 1,
**dadurch gekennzeichnet, daß** die Futterdosiervorrichtung eine Tieridentifikationsvorrichtung (12) umfaßt, wobei die Rolle (19, 29, 39, 47, 56) mit Hilfe von Daten von der Tieridentifikationsvorrichtung (12) gesteuert wird.

3. Futterdosiervorrichtung (1, 2, 3, 4, 5) nach Anspruch 1 oder 2,
**dadurch gekennzeichnet, daß** die Rolle (19, 29, 39, 47, 56) nahe und unterhalb der Eintrittsöffnung (11, 21, 31, 41, 51) angeordnet ist.

4. Futterdosiervorrichtung (1, 2, 3, 4, 5) nach Anspruch 1, 2 oder 3,
**dadurch gekennzeichnet, daß** ein Gehäuse (A, B, C, D, E) nahe und unter der Eintrittsöffnung (11, 21, 31, 41, 51) angeordnet ist, wobei in dem Gehäuse (A, B, C, D, E) die Rolle (19, 29, 39, 47, 56) angebracht ist.

5. Futterdosiervorrichtung (1, 2, 3, 4, 5) nach Anspruch 1, 2, 3 oder 4,
**dadurch gekennzeichnet, daß** die bewegliche Schließvorrichtung durch den Futterbehälter (30, 40, 50) gebildet ist, der beweglich ausgeführt ist.

6. Futterdosiervorrichtung (1, 2, 3, 4, 5) nach Anspruch 5,
**dadurch gekennzeichnet, daß** der Futterbehälter (30) einen Wandteil (35) zum Auffangen von restlichem Futter umfaßt.

7. Futterdosiervorrichtung (1, 2, 3, 4, 5) nach Anspruch 5 oder 6,
**dadurch gekennzeichnet, daß** der Futterbehälter (30, 40, 50) über die Rolle (19, 29, 39, 47, 56) an dem Gehäuse (A, B, C, D, E) abgestützt ist.

8. Futterdosiervorrichtung (1, 2, 3, 4, 5) nach einem der vorhergehenden Ansprüche,
**dadurch gekennzeichnet, daß** der Motor in dem Gehäuse (A, B, C, D, E) angeordnet ist.

9. Futterdosiervorrichtung (1, 2, 3, 4, 5) nach einem der vorhergehenden Ansprüche 2 bis 8,
**dadurch gekennzeichnet, daß** die Tieridentifikationsvorrichtung (12) in dem Gehäuse (A, B, C, D, E) angeordnet ist.

10. Futterdosiervorrichtung (1, 2, 3, 4, 5) nach einem der vorhergehenden Ansprüche,
**dadurch gekennzeichnet, daß** die Futterdosiervorrichtung weitere Abschreckungsvorrichtungen umfaßt, wobei die weiteren Vorrichtungen einen Lautsprecher (16) zum Erzeugen eines das Tier abschreckenden Tones enthalten.

11. Futterdosiervorrichtung (1, 2, 3, 4, 5) nach einem der vorhergehenden Ansprüche,
**dadurch gekennzeichnet, daß** die Futterdosiervorrichtung weitere Abschreckungsvorrichtungen umfaßt, wobei die weiteren Vorrichtungen eine Lichtanlage (15) zum Aussenden eines das Tier abschreckenden Lichtes enthalten.

12. Futterdosiervorrichtung (1, 2, 3, 4, 5) nach einem der vorhergehenden Ansprüche,
**dadurch gekennzeichnet, daß** die Futterdosiervorrichtung weitere Abschreckungsvorrichtungen umfaßt, wobei die weiteren Vorrichtungen eine Spannungsabgabevorrichtung (27) zum Abgeben einer das Tier abschreckenden elektrischen Spannung enthalten.

13. Futterdosiervorrichtung (1, 2, 3, 4, 5) nach einem der vorhergehenden Ansprüche 10 bis 12,
**dadurch gekennzeichnet, daß** die weiteren Abschreckungsvorrichtungen zum Abschrecken eines Tieres zumindest teilweise in dem Gehäuse (A, B, C, D, E) angeordnet sind.

14. Futterdosiervorrichtung (1, 2, 3, 4, 5) nach einem der vorhergehenden Ansprüche,
**dadurch gekennzeichnet, daß** die Futterdosiervorrichtung mit einer Vorrichtung zum Wiegen des in dem Futterbehälter (10, 20, 30, 40, 50) befindlichen Futters und/oder der Trinkflüssigkeit versehen ist, wobei die Vorrichtung den Futterbehälter (10, 20, 30, 40, 50) in einer schwenkenden bzw. einer drehenden Weise bewegt.

15. Futterdosiervorrichtung (1, 2, 3, 4, 5) nach Anspruch 14,
**dadurch gekennzeichnet, daß** die Vorrichtung zum Wiegen des in dem Futterbehälter (10, 20, 30, 40, 50) befindlichen Futters und/oder der Trinkflüssigkeit mit der Futterzuführvorrichtung (13, 23, 33, 43) verbunden ist, um mit Hilfe von Daten sowohl von der Tieridentifikationsvorrichtung (12, 22, 32, 42, 52) als auch von der Wägevorrichtung dem Futterbehälter (10, 20, 30, 40, 50) eine Menge an Futter und/oder Trinkflüssigkeit zuzuführen.

16. Futterdosiervorrichtung (1, 2, 3, 4, 5) nach Anspruch 14 oder 15,
**dadurch gekennzeichnet, daß** die Vorrichtung zum Wiegen des in dem Futterbehälter befindlichen Futters und/oder der Trinkflüssigkeit folgende Teile umfaßt:
einen Futterbehälter (10, 20, 30, 40, 50), der um einen Gelenkstift (26, 36, 45, 57) schwenkbar ist, wobei das Maß der Schwenkbarkeit durch das Gewicht des in dem Futterbehälter (10, 20, 30, 40, 50) befindlichen Futters und/oder der Trinkflüssigkeit bestimmt wird,
eine Vorrichtung (18, 201), um das Maß der Schwenkbarkeit des Futterbehälters (10, 20, 30, 40, 50) zu ermitteln und von dem ermittelten Maß das Gewicht des in dem Futterbehälter (10, 20, 30, 40, 50) befindlichen Futters und/oder der Trinkflüssigkeit abzuleiten.

17. Futterdosiervorrichtung (1, 2, 3, 4, 5) nach Anspruch 16,
**dadurch gekennzeichnet, daß** die Vorrichtung (18, 201), um das Maß der Schwenkbarkeit des Futterbehälters (10, 20, 30, 40, 50) zu ermitteln und von dem ermittelten Maß das Gewicht des in dem Futterbehälter (10, 20, 30, 40, 50) befindlichen Futters und/oder der Trinkflüssigkeit abzuleiten, in dem Gehäuse (A, B, C, D, E) angeordnet ist.

18. Futterdosiervorrichtung (1, 2, 3, 4, 5) nach Anspruch 16 oder 17,
**dadurch gekennzeichnet, daß** die Vorrichtung, um das Maß der Schwenkbarkeit des Futterbehälters zu ermitteln und von dem ermittelten Maß das Gewicht des in dem Futterbehälter befindlichen Futters und/oder der Trinkflüssigkeit abzuleiten, eine Meßrolle (19, 29, 39, 47, 56) umfaßt, die mit dem Futterbehälter in Kontakt steht.

19. Futterdosiervorrichtung (1, 2, 3, 4, 5) nach Anspruch 16 oder 17,
**dadurch gekennzeichnet, daß** die Vorrichtung, um das Maß der Schwenkbarkeit des Futterbehälters zu ermitteln und von dem ermittelten Maß das Gewicht des in dem Futterbehälter befindlichen Futters und/oder der Trinkflüssigkeit abzuleiten, durch einen Belastungssensor (202) gebildet ist, wobei der Futterbehälter auf dem Belastungssensor (202) abgestützt ist.

20. Futterdosiervorrichtung (1, 2, 3, 4, 5) nach Anspruch 19,
**dadurch gekennzeichnet, daß** der Belastungssensor (202) in dem Gehäuse (A, B, C, D, E) angeordnet ist.

21. Futterdosiervorrichtung (1, 2, 3, 4, 5) nach Anspruch 18 oder 20,
**dadurch gekennzeichnet, daß** ein Gelenkstift (204, 59) und die Meßrolle (29, 56) bzw. der Belastungssensor (202) in geringem Abstand voneinander angeordnet sind.

22. Futterdosiervorrichtung (1, 2, 3, 4, 5) nach einem der vorhergehenden Ansprüche 14 bis 21,
**dadurch gekennzeichnet, daß** ein Sicherheitsstützbügel (101, 205, 58) für den Futterbehälter vorgesehen ist.

23. Futterdosiervorrichtung (1, 2, 3, 4, 5) nach Anspruch 14,
**dadurch gekennzeichnet, daß** die Vorrichtung zum Wiegen des in dem Futterbehälter befindlichen Futters und/oder der Trinkflüssigkeit folgende Teile umfaßt:
einen beweglichen Futterbehälter (30),
einen Motor (38) zum Bewegen des Futterbehälters (30),
eine Vorrichtung (301), um die Größe des Drehmoments während der Bewegung zu messen und von der gemessenen Größe des Drehmoments das Gewicht des in dem Futterbehälter (30) befindlichen Futters und/oder der Trinkflüssigkeit abzuleiten.

24. Futterdosiervorrichtung (1, 2, 3, 4, 5) nach Anspruch 23,
**dadurch gekennzeichnet, daß** der Motor (38) zum Bewegen des Futterbehälters (30) und die Vorrichtung (301), um die Größe des Drehmoments während der Bewegung zu messen und von der gemessenen Größe des Drehmoments das Gewicht des in dem Futterbehälter (30) befindlichen Futters und/oder der Trinkflüssigkeit abzuleiten, in dem Gehäuse (A, B, C, D, E) angeordnet sind.

25. Futterdosiervorrichtung (1, 2, 3, 4, 5) nach Anspruch 23 oder 24,
**dadurch gekennzeichnet, daß** der Motor (38) zum Bewegen des Futterbehälters (30) eine Drehmomentrolle (39) antreibt, wobei die Drehmomentrolle (39) in Kontakt mit dem Futterbehälter (30) steht.

26. Futterdosiervorrichtung (1, 2, 3, 4, 5) nach den Ansprüchen 5 und 25 oder den Ansprüchen 5 und 18,
**dadurch gekennzeichnet, daß** die Rolle zum Antreiben des Futterbehälters und die Drehmomentrolle bzw. die Meßrolle durch eine Rolle gebildet sind.

## Revendications

1. Dispositif de dosage d'alimentation (1, 2, 3, 4, 5) pour la distribution de fourrage et/ou de boisson en portions dosées à un animal, lequel dispositif de dosage d'alimentation (1, 2, 3, 4, 5) est muni d'une unité d'alimentation (10, 20, 30, 40, 50) destinée à contenir du fourrage et/ou de la boisson, d'une ouverture d'entrée (11, 21, 31, 41, 51) de l'unité d'alimentation (10, 20, 30, 40, 50), et d'un dispositif de fourniture d'alimentation (13, 23, 33, 43) destiné à fournir une quantité de fourrage et/ou de boisson à l'unité d'alimentation (10, 20, 30, 40, 50), le dispositif de dosage d'alimentation (1, 2, 3, 4, 5) étant muni de moyens de fermeture (25, 30, 40, 46, 50, 55) que l'on peut déplacer dans l'ouverture d'entrée afin de dissuader un animal visitant l'unité d'alimentation (10, 20, 30, 40, 50) de prendre du fourrage et/ou de la boisson, **caractérisé en ce que** les moyens de fermeture (25, 30, 40, 46, 50, 55) tournent autour d'un axe (26, 36, 45, 57), les moyens de fermeture étant actionnés par un rouleau (19, 29, 39, 47, 56) qui est en contact avec les moyens de fermeture, lequel rouleau (19, 29, 39, 47, 56) est actionné par un moteur (28, 38, 48).

2. Dispositif de dosage d'alimentation (1, 2, 3, 4, 5) selon la revendication 1, **caractérisé en ce que** le dispositif de dosage d'alimentation comprend un dispositif d'identification des animaux (12), le rouleau (19, 29, 39, 47, 56) étant commandé à l'aide de données provenant du dispositif d'identification des animaux (12).

3. Dispositif de dosage d'alimentation (1, 2, 3, 4, 5) selon la revendication 1 ou 2, **caractérisé en ce que** le rouleau (19, 29, 39, 47, 56) est placé à proximité de l'ouverture d'entrée (11, 21, 31, 41, 51), en-dessous de celle-ci.

4. Dispositif de dosage d'alimentation (1, 2, 3, 4, 5) selon la revendication 1, 2 ou 3, **caractérisé en ce que** un logement (A, B, C, D, E) est placé à proximité de l'ouverture d'entrée (11, 21, 31, 41, 51), en-dessous de celle-ci, dans lequel logement (A, B, C, D, E) le rouleau (19, 29, 39, 47, 56) est monté.

5. Dispositif de dosage d'alimentation (1, 2, 3, 4, 5) selon la revendication 1, 2, 3 ou 4, **caractérisé en ce que** les moyens de fermeture mobiles sont constitués par l'unité d'alimentation (30, 40, 50), qui est conçue comme une unité d'alimentation mobile.

6. Dispositif de dosage d'alimentation (1, 2, 3, 4, 5) selon la revendication 5, **caractérisé en ce que** l'unité d'alimentation (30) comprend une partie murale (35) destinée à attraper l'alimentation restante.

7. Dispositif de dosage d'alimentation (1, 2, 3, 4, 5) selon la revendication 5 ou 6, **caractérisé en ce que** l'unité d'alimentation (30, 40, 50) repose sur le logement (A, B, C, D, E) par l'intermédiaire du rouleau (19, 29, 39, 47, 56).

8. Dispositif de dosage d'alimentation (1, 2, 3, 4, 5) selon l'une quelconque des revendications précédentes, **caractérisé en ce que** le moteur est intégré dans le logement (A, B, C, D, E).

9. Dispositif de dosage d'alimentation (1, 2, 3, 4, 5) selon l'une quelconque des revendications précédentes 2 à 8, **caractérisé en ce que** le dispositif d'identification des animaux (12) est intégré dans le logement (A, B, C, D, E).

10. Dispositif de dosage d'alimentation (1, 2, 3, 4, 5) selon l'une quelconque des revendications précédentes, **caractérisé en ce que** le dispositif de dosage de l'alimentation comprend des moyens supplémentaires de dissuasion, lesquels moyens supplémentaires comprennent un haut-parleur (16) destiné à produire un son effrayant les animaux.

11. Dispositif de dosage d'alimentation (1, 2, 3, 4, 5) selon l'une quelconque des revendications précédentes, **caractérisé en ce que** le dispositif de dosage de l'alimentation comprend des moyens supplémentaires de dissuasion, lesquels moyens supplémentaires comprennent un dispositif d'éclairage (15) destiné à émettre une lumière effrayant les animaux.

12. Dispositif de dosage d'alimentation (1, 2, 3, 4, 5) selon l'une quelconque des revendications précédentes, **caractérisé en ce que** le dispositif de dosage de l'alimentation comprend des moyens supplémentaires de dissuasion, lesquels moyens supplémentaires comprennent un dispositif émettant des décharges électriques (27) destiné à émettre des décharges électriques effrayant les animaux.

13. Dispositif de dosage d'alimentation (1, 2, 3, 4, 5) selon l'une quelconque des revendications précédentes 10 à 12, **caractérisé en ce que** les moyens supplémentaires de dissuasion pour dissuader un animal sont au moins partiellement intégrés dans le logement (A, B, C, D, E).

14. Dispositif de dosage d'alimentation (1, 2, 3, 4, 5) selon l'une quelconque des revendications précédentes, **caractérisé en ce que** le dispositif de dosage de l'alimentation est doté de moyens de pesage du fourrage et/ou de la boisson présents dans l'unité d'alimentation (10, 20, 30, 40, 50), lesquels moyens déplacent l'unité d'alimentation (10, 20, 30, 40, 50) respectivement d'une manière pivotante et rotative.

15. Dispositif de dosage d'alimentation (1, 2, 3, 4, 5) selon la revendication 14, **caractérisé en ce que** les moyens de pesage du fourrage et/ou de la boisson présents dans l'unité d'alimentation (10, 20, 30, 40, 50) sont reliés au dispositif de fourniture d'alimentation (13, 23, 33, 43) destiné à fournir une quantité de fourrage et/ou de boisson à l'unité d'alimentation (10, 20, 30, 40, 50) à l'aide de données provenant à la fois du dispositif d'identification des animaux (12, 22, 32, 42, 52) et des moyens de pesage.

16. Dispositif de dosage d'alimentation (1, 2, 3, 4, 5) selon la revendication 14 ou 15, **caractérisé en ce que** les moyens de pesage du fourrage et/ou de la boisson présents dans l'unité d'alimentation comprennent :
une unité d'alimentation (10, 20, 30, 40, 50), qui pivote autour d'un axe de charnière (26, 36, 45, 57), le degré de pivotabilité étant déterminé par le poids du fourrage et/ou de la boisson présents dans l'unité d'alimentation (10, 20, 30, 40, 50),
un dispositif (18, 201) pour déterminer le degré de pivotabilité de l'unité d'alimentation (10, 20, 30, 40, 50) et pour déduire, à partir du degré ainsi déterminé, le poids du fourrage et/ou de la boisson présents dans l'unité d'alimentation (10, 20, 30, 40, 50).

17. Dispositif de dosage d'alimentation (1, 2, 3, 4, 5) selon la revendication 16, **caractérisé en ce que** le dispositif (18, 201) pour déterminer le degré de privotabilité de l'unité d'alimentation (10, 20, 30, 40, 50) et pour déduire, à partir du degré ainsi déterminé, le poids du fourrage et/ou de la boisson présents dans l'unité d'alimentation (10, 20, 30, 40, 50), est intégré dans le logement (A, B, C, D, E).

18. Dispositif de dosage d'alimentation (1, 2, 3, 4, 5) selon la revendication 16 ou 17, **caractérisé en ce que** le dispositif pour déterminer le degré de privotabilité de l'unité d'alimentation et pour déduire, à partir du degré ainsi déterminé, le poids du fourrage et/ou de la boisson présents dans l'unité d'alimentation, comprend un rouleau de mesure (19, 29, 39, 47, 56) qui est en contact avec l'unité d'alimentation.

19. Dispositif de dosage d'alimentation (1, 2, 3, 4, 5) selon la revendication 16 ou 17, **caractérisé en ce que** le dispositif pour déterminer le degré de privotabilité de l'unité d'alimentation et pour déduire, à partir du degré ainsi déterminé, le poids du fourrage et/ou de la boisson présents dans l'unité d'alimentation, est constitué par un capteur de charge (202), l'unité d'alimentation reposant sur le capteur de charge (202).

20. Dispositif de dosage d'alimentation (1, 2, 3, 4, 5) selon la revendication 19, **caractérisé en ce que** le capteur de charge (202) est intégré dans le logement (A, B, C, D, E) .

21. Dispositif de dosage d'alimentation (1, 2, 3, 4, 5) selon la revendication 18 ou 20, **caractérisé en ce que** un axe de charnière (204, 59) et le rouleau de mesure (29, 56) respectivement le capteur de charge (202) sont situés à proximité les uns des autres.

22. Dispositif de dosage d'alimentation (1, 2, 3, 4, 5) selon l'une quelconque des revendications précédentes 14 à 21, **caractérisé en ce que** un support de sécurité (101, 205, 58) est aménagé pour l'unité d'alimentation.

23. Dispositif de dosage d'alimentation (1, 2, 3, 4, 5) selon la revendication 14, **caractérisé en ce que** les moyens de pesage du fourrage et/ou de la boisson présents dans l'unité d'alimentation comprennent :
une unité d'alimentation (30) mobile,
un moteur (38) pour déplacer l'unité d'alimentation (30),
un dispositif (301) pour mesurer la magnitude du couple pendant le mouvement et pour déduire, à partir de la magnitude du couple ainsi mesurée, le poids du fourrage et/ou de la boisson présents dans l'unité d'alimentation (30).

24. Dispositif de dosage d'alimentation (1, 2, 3, 4, 5) selon la revendication 23, **caractérisé en ce que** le moteur (38) pour déplacer l'unité d'alimentation (30), et le dispositif (301) pour mesurer la magnitude du couple pendant le mouvement et pour déduire, à partir de la magnitude du couple ainsi mesurée, le poids du fourrage et/ou de la boisson présents dans l'unité d'alimentation (30), sont intégrés dans le logement (A, B, C, D, E) .

25. Dispositif de dosage d'alimentation (1, 2, 3, 4, 5) selon la revendication 23 ou 24, **caractérisé en ce que** le moteur (38) pour déplacer l'unité d'alimentation (30) actionne un rouleau de couple (39), lequel rouleau de couple (39) est en contact avec l'unité d'alimentation (30).

26. Dispositif de dosage d'alimentation (1, 2, 3, 4, 5) selon les revendications 5 et 25 ou les revendications 5 et 18, **caractérisé en ce que** le rouleau pour activer l'unité d'alimentation et le rouleau de couple respectivement le rouleau de mesure, sont constitués par un rouleau.
